# EUROPEAN PATENT APPLICATION

(11) **EP 1 595 511 A1**
(43) Date of publication of application: **16.11.2005**
(21) Application number: 04011130.4
(22) Date of filing: 11.05.2004
(51) Int. Cl.: A61C 15/02, A47G 21/12, A61C 19/02

(54) **A portable interdental cleaning device with disposable cleaning tips**

(71) Applicant: Wessen Industries Limited, Kowloon Bay Hong Kong (HK)
(72) Inventor: Su, Yu Hong Unit 815-818, Kowloon Bay Hong kong (HK); Yeung, Tze Fung Unit 815-818, Kowloon Bay Hong kong (HK)
(74) Representative: Meyer-Dulheuer, Karl-Hermann

(57) **Abstract**

The present invention relates to a portable interdental cleaning device with disposable cleaning tips, comprising a casing having two elongated chambers (2,3) inside, each with a cover; a handle (4) having a cavity head at one end, which is detachably disposed inside the first elongated chamber (2); a row of cleaning tips (5), each of which has a base holding filament (52) for interdental cleaning and the size and shape of the base are just fit to be securely placed inside the cavity head of the handle (4) and removed therefrom; a wheel (6) with gears underneath, which is installed with the wheel (6) on the outer surface of the casing and the gears inside the second elongated chamber (3), and the gears mesh with the bases of the cleaning tips in a way that the row of cleaning tips (5) is moved upwards to expose the cleaning tips outside the second elongated chamber (3) of the casing by rotating the wheel (6) of the casing in one way direction.

## Description

### Technical Field

The present invention relates to an interdental cleaning device and more particularly pertains to a portable interdental cleaning device with disposable cleaning tips which can prevent the cleaning tips from bacterial contamination, thus improving the hygiene of interdental cleaning.

### Background Art

Dental flossing is an effective way to clean the gaps between teeth. It helps to prevent bad breadth, tooth decay and other dental and periodontal diseases such as gingivitis. Conventional dental floss is usually in the form of a long piece of thread packaged in a small box. Users wind the dental floss around his fingers and then gently slide the floss between his teeth in order to remove any plaque, debris or food remnants in the interdental gaps. Nonetheless, it is usually inconvenient and unhygienic to floss with fingers. If the user inadvertently forgets to wash his hands before flossing, bacterial infection may be resulted. Moreover, the act of flossing with fingers is not a pleasant sight. Therefore, users can only perform dental flossing at home or in a private space.

Nowadays, there are also interdental tooth cleaners available in the marketplace. Conventional manual interdental cleaner usually comprises a handle and a small tapered or cylindrical tip with fine and soft bristles or a single nylon filament which can reach the interdental gaps. There are also electrical interdental cleaners which can generate thousands of strokes per minute. Users simply slip the bristles or filament of the cleaning tip between the teeth and switch on the power, and then the vibrating cleaning tip will clean the interdental gap. Although the use of the electrical or manual interdental cleaners is more convenient and comfortable than traditional manual flossing, the cleaning tip usually requires careful clean up after use. In some cases, despite the cleaning tip is cleaned up thoroughly, as it remains exposed in the air, it may still open to bacterial contamination. The use of a dirty and contaminated cleaning tip may cause dental or periodontal diseases or even other health problems.

### Disclosure of the Invention

In view of the aforesaid disadvantages now present in the prior art, the present invention provides a portable interdental cleaning device with disposable cleaning tips which can ensure a high sanitary level of the cleaning tips. It is small and compact in size and is convenient to carry around. The present invention can improve the hygiene of interdental cleaning as well as the health of the users.

To attain this, the present invention generally comprises a casing having two elongated chambers inside, each with a cover concealing its interior from outside; a handle having a cavity head at one end, which is detachably disposed inside the first elongated chamber; a row of cleaning tips, each of which has a base holding filament for interdental cleaning and the size and shape of the base are just fit to be securely placed inside the cavity head of the handle and removed therefrom, which is set in a row by connecting the base from one to one in a series and is placed inside the second elongated chamber; a wheel with gears underneath, which is installed with the wheel on the outer surface of the casing and the gears inside the second elongated chamber, and the gears mesh with the bases of the cleaning tips in a way that the row of cleaning tips is moved upwards to expose the cleaning tips outside the second elongated chamber of the casing by rotating the wheel of the casing in one way direction.

Each of the cleaning tips is made up of a plurality of tapered or non-tapered nylon filaments or of a single nylon filament.

Each of the cleaning tips is made up of any non-toxic cleaning material available in the marketplace which is soft and fine enough to reach the interdental gaps.

In the row of cleaning tips, there is a plurality of connecting sticks and in between each two bases of the cleaning tips, there is one such connecting stick. The cavity head of the handle has a trough at one side of the opening. The size and shape of each connecting stick are just fit to be securely placed inside the trough of the cavity head and to be removed therefrom. The size and thickness of each connecting stick enable it to be broken by applying force through leverage so that a cleaning tip together with its base can be separated from the row of cleaning tips and taken out from the casing.

The cavity of the cavity head of the handle is in hexagonal shape and the base of each cleaning tip is in corresponding hexagonal shape.

The cavity of the cavity head of the handle is in hexagonal shape with a trough at one side and the base of each cleaning tip is in corresponding hexagonal shape with the connecting stick connected thereto just fit to be placed inside the trough.

The cavity of the cavity head of the handle is in C shape with a trough at one side and the base of each cleaning tip is in corresponding C shape with the connecting stick connected thereto just fit to be placed inside the trough.

The cavity of the cavity head of the handle is in O shape and the base of each cleaning tip is in corresponding O shape.

The cavity of the cavity head of the handle is in any geometrical shape and the base of each cleaning tip is in corresponding geometrical shape.

The thickness of the casing is reduced to the minimum just fit for keeping the row of cleaning tips in place inside the casing and for allowing the row of cleaning tips moving upwards by the gear motion of the turning wheel.

A mounting track is added inside the second elongated chamber of the casing for mounting the row of cleaning tips so that the row of cleaning tips is placed more securely and meshes with the gears of the wheel more smoothly.

To use the present invention, the user first takes out the handle from the casing. The user then turns the wheel until a cleaning tip is exposed from the casing. Next the user uses the cavity head of the handle to grasp and hold the base of the cleaning tip. The user then applies force onto the handle and by means of leverage the cleaning tip is easily separated from the row of cleaning tips. The user then holds the handle to place the filament of the cleaning tip between his teeth to clean the interdental gap. After finishing cleaning his teeth, the user can remove the cleaning tip from the handle and place the handle back in the casing and dispose of the cleaning tip.

### Brief Description of Drawings

FIG. 1 shows a perspective view of the present invention.
FIG. 2 shows a perspective view of the present invention with the cover of the first elongated chamber being opened.
FIG. 3 shows a perspective view of the present invention inside the casing.
FIG. 4 shows a perspective view of the cavity head of the handle of the present invention.
FIG. 5 shows a perspective view of the bases of the row of cleaning tips of the present invention.
FIG. 6 shows an elevation view of individual cleaning tips of the present invention.
FIG. 7 shows a perspective view of the gears of the wheel of the present invention.
FIG. 8 shows an enlarged perspective view of the present invention while in use.

### Best Mode for Carrying out the Invention

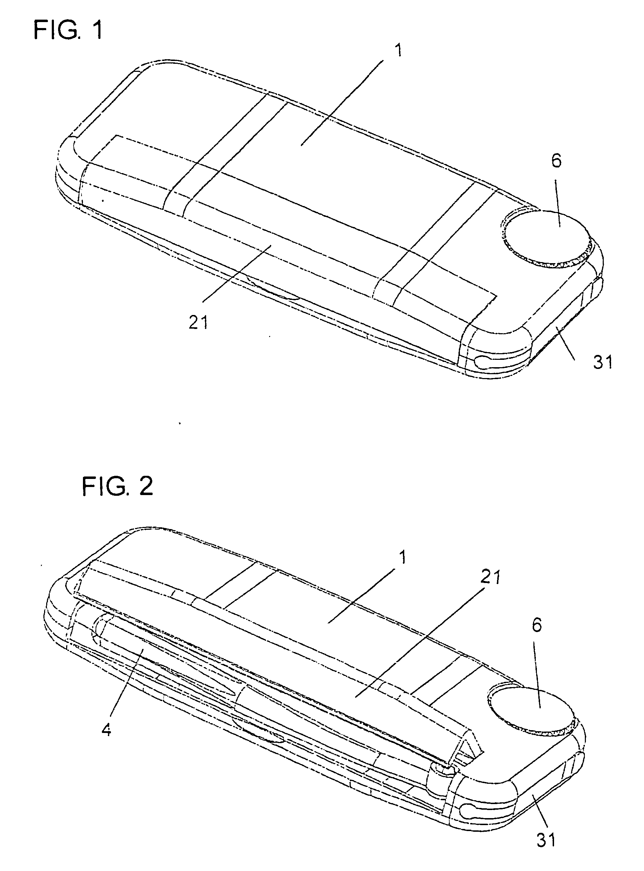

As illustrated in FIG. 1 to FIG. 3, an embodiment of the present invention comprises a casing 1 having two elongated chambers inside, namely the first elongated chamber 2 and the second elongated chamber 3, each with a cover 21, 31 concealing its interior from outside.

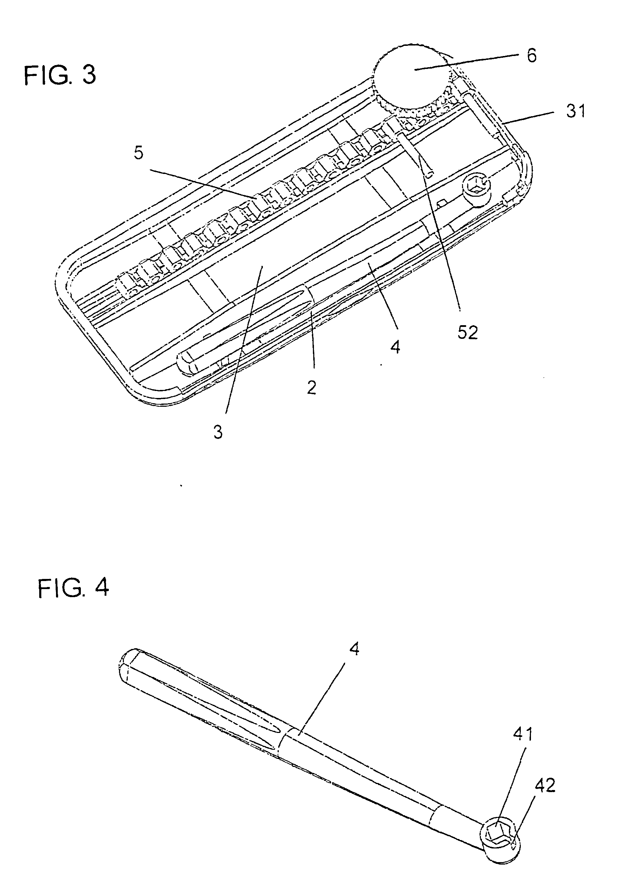

As illustrated in FIG. 2 and FIG. 3, there is a handle 4 detachably disposed inside the first elongated chamber 2, which has a cavity head 41 at one end. By opening the cover 21, the handle 4 can be taken out from the first elongated chamber 2 for use or placed back inside the first elongated chamber 2 after use.

As illustrated in FIG. 4, the cavity of the cavity head 41 of the handle 4 is in hexagonal shape with a trough 42 at one side.

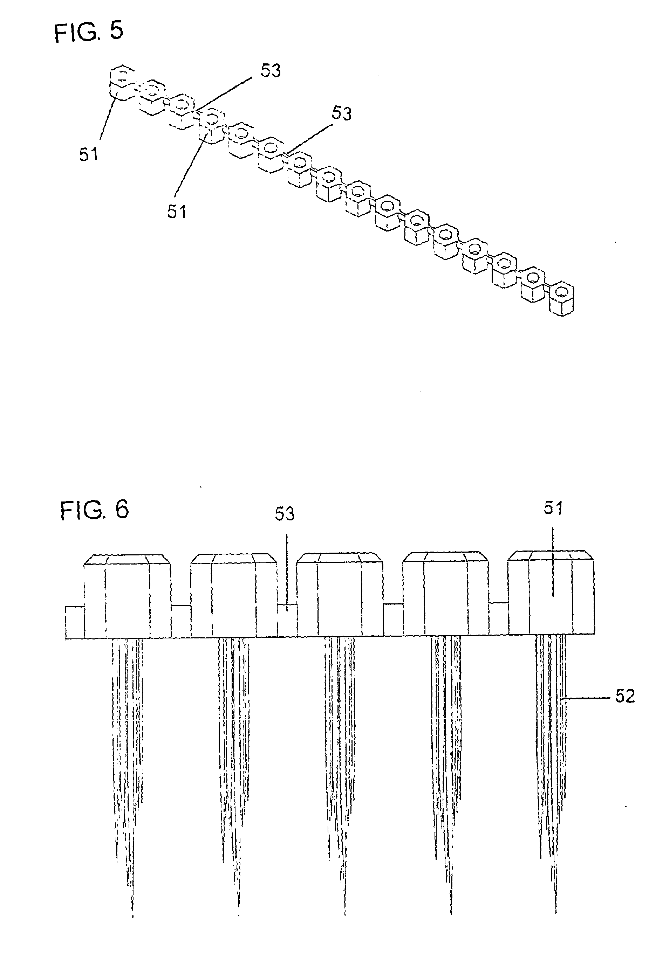

As illustrated in FIG. 3, FIG. 5 and FIG. 6, inside the second elongated chamber 3, there is a row of cleaning tips 5, each of which has a base 51 holding a plurality of tapered nylon filaments 52 for interdental cleaning. In the row of cleaning tips 5, there is a plurality of connecting sticks 53 and in between each two bases 51 of the cleaning tips, there is one such connecting stick 53, thus connecting the bases 51 one to one in a series. The base 51 of each cleaning tip is in hexagonal shape corresponding to the hexagonal shape of the cavity of the cavity head 41 of the handle 4. The base 51 of each cleaning tip is just fit to be securely placed inside the cavity head 41 of the handle 4 and removed therefrom. Each of the connecting sticks 53, which is connected to the bases 51 of the cleaning tips, is just fit to be placed inside the trough 42 of the handle 4. The size and thickness of each connecting stick 53 enable it to be broken by applying force through leverage so that a cleaning tip together with its base 51 can be separated from the row of cleaning tips 5 and taken out from the casing 1.

As illustrated in FIG. 3, FIG. 7 and FIG. 8, the present invention comprises a wheel 6 with gears 61 underneath, which is installed with the wheel 6 on the outer surface of the casing 1 and the gears 61 inside the second elongated chamber 3, and the gears 61 mesh with the bases 51 of the cleaning tips in a way that the row of cleaning tips 5 is moved upwards to expose the cleaning tips outside the second elongated chamber 3 of the casing 1 by rotating the wheel 6 of the casing 1 in one way direction.

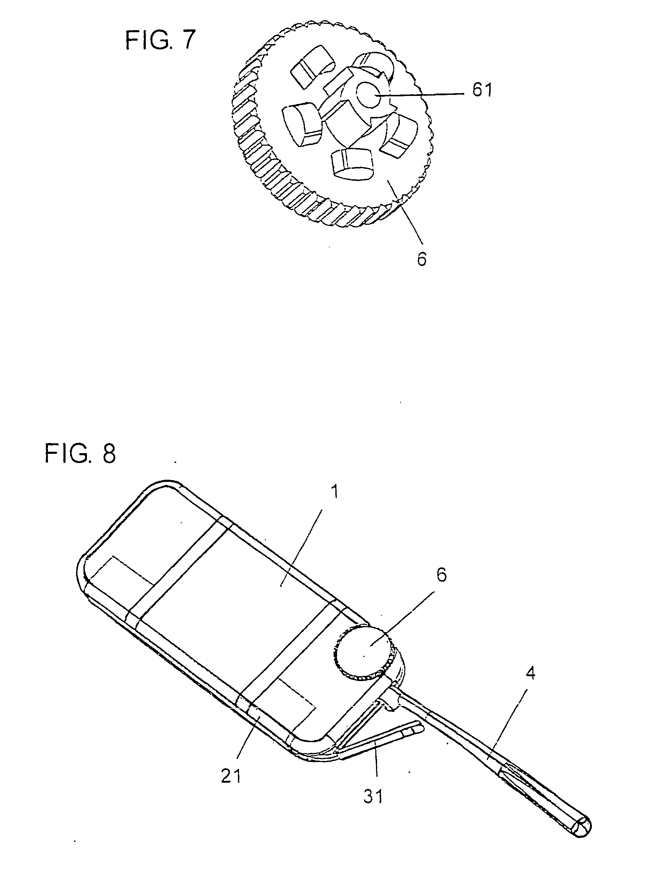

As illustrated in FIG. 3 and FIG. 8, to use the present invention, the user first takes out the handle 4 from the casing 1. The user then turns the wheel 6 until a cleaning tip is exposed from the casing 1. Next the user uses the cavity head 41 of the handle 4 to grasp and hold the base 51 of the cleaning tip. The user then applies force onto the handle 4 and by means of leverage the cleaning tip is easily separated from the row of cleaning tips 5. The user then holds the handle 4 to place the filaments 52 of the cleaning tip between his teeth to clean the interdental gap. After finishing cleaning his teeth, the user can remove the cleaning tip from the handle 4 and place the handle 4 back in the casing 1 and dispose of the cleaning tip.

As to a further discussion of the manner of usage and operation of the present invention, the same should be apparent from the above description. Accordingly, no further discussion relating to the manner of usage and operation is provided.

With respect to the above description, it is to be realized that the optimum relationships for the parts of the invention in regard to size, shape, form, materials, function and manner of operation, assembly and use are deemed readily apparent and obvious to those skilled in the art, and all equivalent relationships to those illustrated in the drawings and described in the specification are intended to be encompassed by the present invention.

The present invention is capable of other embodiments and of being practiced and carried out in various ways. It is to be understood that the phraseology and terminology employed herein are for the purpose of description and should not be regarded as limiting.

Therefore, the foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to falling within the scope of the invention.

### Industrial Applicability

The present invention provides an interdental cleaning device with small and compact disposable cleaning tips which can ensure a high sanitary level of the cleaning tips, thus minimizing possible risks of bacterial infection caused by interdental cleaning. The present invention is of simple and reliable construction and is easy and convenient to use. Further, the present invention is susceptible of a low cost of manufacture with regard to both materials and labor, and which accordingly is then susceptible of low prices of sale to the consuming public, thereby making such interdental cleaning device economically available to the buying public, thus overcoming the disadvantages of the prior art.

## Claims

1. A portable interdental cleaning device with disposable cleaning tips, comprising:
a casing having two elongated chambers inside, each with a cover concealing its interior from outside;
a handle having a cavity head at one end, which is detachably disposed inside the first elongated chamber;
a row of cleaning tips, each of which has a base holding filament for interdental cleaning and the size and shape of the base are just fit to be securely placed inside the cavity head of the handle and removed therefrom, which is set in a row by connecting the base from one to one in a series and is placed inside the second elongated chamber;
a wheel with gears underneath, which is installed with the wheel on the outer surface of the casing and the gears inside the second elongated chamber, and the gears mesh with the bases of the cleaning tips in a way that the row of cleaning tips is moved upwards to expose the cleaning tips outside the second elongated chamber of the casing by rotating the wheel of the casing in one way direction.

2. A portable interdental cleaning device with disposable cleaning tips as in claim 1, wherein each of the cleaning tips is made up of a plurality of tapered or non-tapered nylon filaments or of a single nylon filament.

3. A portable interdental cleaning device with disposable cleaning tips as in claim 1, wherein in the row of cleaning tips, there is a plurality of connecting sticks and in between each two bases of the cleaning tips, there is one such connecting stick, and the cavity head of the handle has a trough at one side of the opening, and the size and shape of each connecting stick are just fit to be securely placed inside the trough of the cavity head and to be removed therefrom.

4. A portable interdental cleaning device with disposable cleaning tips as in claim 1, wherein the cavity of the cavity head of the handle is in hexagonal shape with a trough at one side and the base of each cleaning tip is in corresponding hexagonal shape with the connecting stick connected thereto just fit to be placed inside the trough.

5. A portable interdental cleaning device with disposable cleaning tips as in claim 1, wherein the cavity of the cavity head of the handle is in C shape with a trough at one side and the base of each cleaning tip is in corresponding C shape with the connecting stick connected thereto just fit to be placed inside the trough.

6. A portable interdental cleaning device with disposable cleaning tips as in claim 1, wherein the cavity of the cavity head of the handle is in hexagonal shape and the base of each cleaning tip is in corresponding hexagonal shape.

7. A portable interdental cleaning device with disposable cleaning tips as in claim 1, wherein the cavity of the cavity head of the handle is in O shape and the base of each cleaning tip is in corresponding O shape.

8. A portable interdental cleaning device with disposable cleaning tips as in claim 1, wherein a mounting track is added inside the second elongated chamber of the casing for mounting the row of cleaning tips so that the row of cleaning tips is placed more securely and meshes with the gears of the wheel more smoothly.
